# EUROPEAN PATENT SPECIFICATION

(11) **EP 0 568 597 B1**
(45) Date of publication and mention of the grant of the patent: **22.03.1995**
(21) Application number: 92903966.7
(22) Date of filing: 22.01.1992
(51) Int. Cl.: C05F 3/00, A01C 3/00, C02F 11/12

(54) **A METHOD OF AND AN APPARATUS FOR SEPARATING LIQUID MANURE INTO A THICK SLURRY PHASE WITH HIGH DRY MATTER CONTENT AND AN AQUEOUS PHASE WITH DESIRED - HIGH, MODERATE OR LOW - N-CONTENT**
VERFAHREN UND VORRICHTUNG ZUR TRENNUNG VON GÜLLE IN EINE DICKE SCHLAMMPHASE HOHEN TROCKENSUBSTANZGEHALTES UND EINE WÄSSRIGE PHASE MIT GEWÜNSCHTEM - HOHEM, MÄSSIGEM ODER NIEDRIGEM - N-GEHALT
PROCEDE ET APPAREIL SERVANT A SEPARER DU FUMIER LIQUIDE EN UNE PHASE BOUEUSE EPAISSE A TENEUR ELEVEE EN MATIERES SECHES ET UNE PHASE AQUEUSE A TENEUR EN N ELEVEE, MOYENNE OU FAIBLE, COMME SOUHAITE

(30) Priority: 23.01.1991 DK 111/91
(43) Date of publication of application: 10.11.1993
(73) Proprietor: FLOCCO-TEC APS, DK-3460 Birkerod (DK)
(72) Inventor: HENRIKSEN, Karsten, DK-3460 Birkerod (DK); FREDERIKSEN, Jens, DK-3460 Birkerod (DK)
(74) Representative: Hegner, Mogens
(86) International application number: DK9200020
(87) International publication number: WO9212944

(56) References cited:
- EP-A- 0 201 722
- EP-A- 0 384 329
- DK-A- 714 988
- Derwent's abstract, No. 86-135 782/21, SU 1 081 824, publ. week 8621

## Description

The present invention relates to a method of and an apparatus for separating liquid manure into a thick slurry phase with high dry matter content and an aqueous phase with desired - high, moderate or low - N-content.

The disposal of liquid manure constitutes a considerable problem in agriculture. A steadily increasing portion of the livestock manure is handled in the form of liquid manure, and in Denmark approx. half the produced livestock manure is removed from the stable as liquid manure. This mode of handling offers quite some advantages work-wise in the stable, but on the other hand it gives rise to problems outside the stable.

In the present context "liquid manure" is defined as a mixture of water, faeces, urine, straw and fudder residues obtained by washing and cleaning stables for livestock such as pigs, hens, cows and horses; and "N-content" is defined as total nitrogen content in whatever chemical form it may occur.

Liquid manure is traditionally disposed of by spreading over the fields whereby the fertilizing value of the nutrients contained therein is poorly utilized.

However, the concentration of nutrients in liquid manure is relatively low. This means that the volume which must be distributed onto the agricultural fields is large compared with its fertilizing value.

Even though, as mentioned, the concentration of nutrients, i.a. nitrogen, is relatively low in liquid manure this does not mean that it is at all times possible to spread out the liquid manure directly in nature without causing i.a. serious environmental problems. A too high N-content and a too high content of dry matter may thus cause scorching of plants, and if the vegetation in the area of spreading is unable to bind the nitrogen which is essentially in the form of ammonia and ammonium ions, it will either be washed down into the soil and converted by bacteria into nitrite and nitrate or be transferred directly to groundwater or other recipients as surface run-off, which in both cases will cause unacceptable contamination of recipients and/or groundwater.

The volume problems have traditionally been solved without considering the environmental problems by storing the liquid manure up until such time when it is desirable to spread the collected liquid manure onto the fields, with resulting considerable demands on liquid manure storage capacity in agriculture.

Typically, the environmental problems have been solved by increasing the storage capacity for liquid manure so that the liquid manure may be spread out at such times of the year when the risk of surface run-off and subsoil wash-out of nutrients is minimized.

A variety of methods of treating liquid manure and other waste waters is known by which a concentrated or improved plant nutrient product may be formed.

Thus, DE OS 21 61 131 describes a method of purifying and clarifying waste water involving treatment thereof with a precipitation agent e.g. Bentonite, whereafter the precipitated material is separated from the aqueous phase which is subsequently treated first with a cation exchanger and then with an anion exchanger. The precipitated material may be used as a plant nutrient.

Further, EP patent application No. 0 201 722 describes a method of converting liquid manure into a solid plant nutrient product which is unharmful to groundwater, according to which the liquid manure is taken from a liquid manure tank and after aeration added with a clay mineral, preferably belonging to the Montmorillonite or Vermiculite family, in an amount being sufficient for binding the total amount of ammonium contained in the liquid manure, i.e. typically about 200-400 kg Montmorillonite per 1 t liquid manure.

Finally, DK patent application No. 7149/88 describes a method of treating liquid manure, which comprises clarification by flocculation and subsequent ion exchange. By this method liquid manure is first subjected to a mechanical separation step, whereafter the mechanically separated liquid manure is mixed with an aqueous suspension of one or more flocculating clay minerals, e.g. Bentonite, the resulting mixture subsequently being introduced into a sedimentation tank for flocculation and sedimentation, whereafter clarified liquid and flocculated slurry are taken out separately from the sedimentation tank. The clarified liquid is then mixed with one or more ion exchange minerals, the resulting mixture subsequently being introduced into a sedimentation tank from which ion exchanged liquid and a slurry of spent ion exchanger are taken out separately. These slurries may be used as plant nutrients.

It is, however, desired to provide a method of treating liquid manure by which the following is achieved:
- reduction of necessary storage capacity;
- time-wise flexible spreading;
- simple spreading by conventional equipment;
- improved exploitation of the content of nutrients; and
- reduction of environmental problems, most importantly reduced N-pollution through wash-out, surface run-off and evaporation, and reduced odour nuisances.

It is further desired to provide a method of treating liquid manure which results in
- an aqueous phase having properties (low content of nutrients) allowing it to be distributed without restrictions on agricultural soil all the year round, or directly to recipients without environmental damage;
and further in
- a phase in the form of thick slurry with high dry matter content, which is subject to the same possible regulations that may apply to storage of liquid manure, and which can be handled by conventional liquid manure spreading equipment.

As, however, the acceptable content of nutrients in such an aqueous phase varies widely from season to season, it is desirable to provide a method which offers the possibility of varying the content of nutrients, in particular the N-content, in the aqueous phase.

It is the object of the present invention to provide such a method of and an apparatus for separating liquid manure which meet the above demands.

The invention relates to a method which is the subject-matter of independant claim 1; preferred features are the subject-matter of independant claims 2-7.

When carrying out the method according to the invention the stored amount of water in the liquid manure can constantly be kept at a desired low value, as it is possible to remove a liquid phase which can be discharged directly to farm land and recipients without risk of environmental contamination, its N-content always being adjustable at a desired, safe value, without performing more process steps than strictly necessary.

Hereby a particularly economic and environmentally acceptable treatment method is provided by which both initial and operational costs are kept at a minimum.

In the present context high, moderate or low N-content in the aqueous phase mean a N-content of 8-3 kg N/m³, 4-2 kg N/m³, and 1-0 kg N/m³, respectively.

When the liquid manure has a dry matter content between 2 and 5 weight-% and a total N-content of 3-6 kg N/m³, the discharged thick slurry may typically have a N-content within the range 7-15 kg N/m³, and a dry matter content within the range 6-12 weight-%.

An advantageous property of the thick slurry consists in its thixotropic nature which partly impedes the diffusion velocity of ammonium from the thick phase to the supernatant water phase in the tank - and partly ensures that it can easily be brought on and kept in a homogeneous, stable and pumpable form, which facilitates the removal from the tank and the subsequent spreading onto the field.

According to a special embodiment the second treatment step is repeated at least once.

According to another preferred embodiment the third treatment step is repeated at least once.

As well the second as the third treatment step may be performed continuously or batch-wise.

The ammonium loaded ion exchanger may be discharged from the third treatment step and either stored as a separate product or transferred to the first treatment step and united with the thick slurry phase formed therein.

The ammonium loaded ion exchanger may also be discharged from the third treatment step and passed to a regeneration step to be subjected to a treatment with an aqueous solution of a regeneration agent, preferably in the form of an aqueous solution of CaCl₂, providing a fresh regenerated cation exchanger and an aqueous ammonium ion containing eluate, which is either stored as a separate product or united with the secondary thick slurry phase withdrawn from the second treatment step and transferred to the first treatment step with the secondary thick slurry.

The regeneration of the ion exchanger may also be performed "in situ", i.e. without transfer of the ion exchanger to a separate regeneration unit.

In this case the introduction of the secondary aqueous phase is cut off when about 66% of the capacity of the ion exchanger has been utilized and an aqueous solution of a regeneration agent, preferably an aqueous solution of CaCl₂, is introduced continuously in an amount corresponding to at least 66% of the capacity of the ion exchanger. Thereafter the introduction of the secondary aqueous phase is immediately resumed.

The introduced solution of the regeneration agent will move through a fixed ion exchange bed as a plug having a front end and a rear end. The arrival of the front end and rear end, respectively, at the exit end of the ion exchange unit is detected by a monitor, e.g. a conductivity sensor, controlling a valve at the exit end of the ion exchange unit having two positions, a first position corresponding to withdrawal of aqueous phase with low N-content as described above, and a second position corresponding to separate withdrawal of exhausted regeneration liquid.

According to a third preferred embodiment the cation exchanger is added and discharged continuously in the third treatment step in counter-current to the secondary aqueous phase, and the cation regeneration step is also carried out continously and in counter-current.

According to a fourth preferred embodiment the liquid manure contains at least 25 weight-% pig manure, calculated on the basis of solid material.

When an aqueous suspension of smectitic clay is used as flocculant it is necessary to age the suspension for up to 3 days before use. If no continuous stirring is applied, a stable suspension can be obtained at a solids content of approx. 10 weight-%. The liquid used to make up the stock suspension is conveniently taken from the supernatant of already flocculated aqueous phase so that further addition of water to the system is avoided.

The invention also relates to an apparatus for separating liquid manure into a thick slurry phase with high dry matter content and an aqueous phase with desired - high, moderate or low - N-content, which is the subject-matter of independant claim 8; preferred features are the subject-matter of dependant claims 9 and 10.

An apparatus according to the invention suited for continuous operation of the second treatment step further may comprise a buffer tank for primary aqueous phase arranged between the outlet for filtered liquid and the inlet pipe of the flocculation and sedimentation tank and a mixing unit arranged between the transfer pipes and said inlet pipe.

An apparatus according to the invention suited for batch-wise operation of the second treatment step further may comprise a buffer tank for the secondary aqueous phase arranged between the outlet for secondary aqueous phase and the transfer pipe connected with the liquid inlet in the ion exchanger tank.

Use of the method and apparatus according to the invention i.a. makes it possible to work with an optimum N-spreading strategy, so that optimum exploitation of the storage capacity is ensured at all times.

In the following the invention is described in more detail by way of examples, reference being made to the drawing, wherein
- Fig. 1: shows a continuously operating plant for carrying out the present method;
- Fig. 2: shows a corresponding plant in which the flocculation and sedimentation step is performed batch-wise;
- Fig. 3: shows the volumes of total material, aqueous phase and thick sludge stored in the sedimentation tank plotted as a function of time;
- Fig. 4: shows percentage dry matter, kg N/m³, respectively of the material stored in the sedimentation tank plotted as a function of time; and
- Fig. 5: shows accumulated values of kg N from stable, in tank and irrigated, respectively, as a function of time.

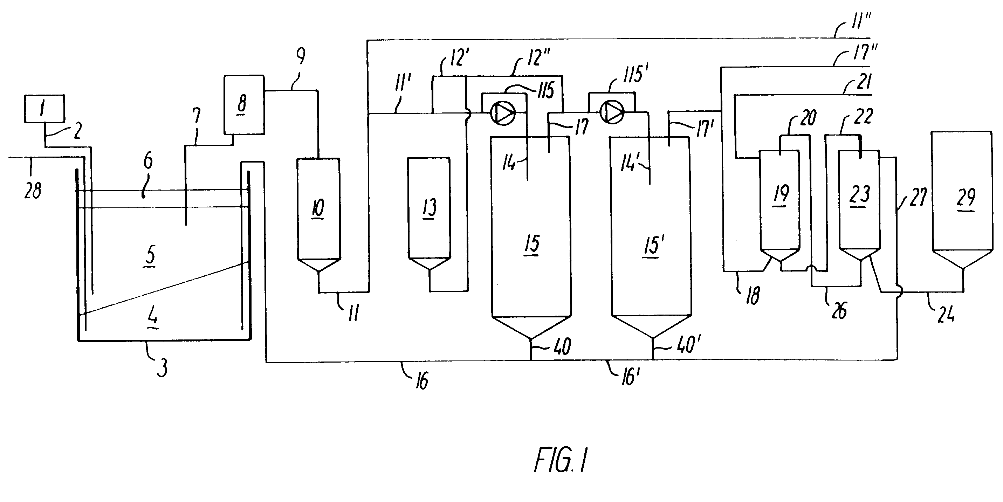

Fig. 1 shows a continuously operating plant for carrying out the present method comprising a sedimentation tank 3 having an inlet for liquid manure 2 coming from a stable 1, an outlet for thick slurry 28 and an outlet 7 for aqueous phase, which outlet is connected with a filtration apparatus 8 having an outlet 9 for filtered liquid which is connected with a buffer tank 10 with an outlet 11 which via a not shown change-over valve is connected with an outlet 11'' for aqueous phase with high N-content and a transfer pipe 11' being connected with a mixing unit 115.

The apparatus further comprises a tank 13 for an aqueous suspension of flocculating smectite containing clay which via pipes 12 and 12' communicates with the mixing unit 115 and which via pipes 12 and 12'' communicates with a second mixing unit 115'.

The mixing unit 115 is via a pipe 14 connected with a flocculation and sedimentation tank 15 having an outlet 40 for thick slurry phase which via a pipe 16 communicates with the lower part of the sedimentation tank 3.

Further, the tank 15 has an outlet 17 for liquid phase which is connected with the mixing unit 115' which via a pipe 14' is connected with a second flocculation and sedimentation tank 15' having an outlet 40' for thick slurry phase, which via a pipe 16' and the pipe 16 is connected with the lower part of the sedimentation tank 3.

The tank 15' is further provided with an outlet for liquid phase 17' which via a change-over valve is connected with an outlet 17'' for aqueous phase with moderate N-content and a transfer pipe 18, which is connected with a liquid inlet in an ion exchanger tank 19 having an inlet 20 for fresh ion exchanger, an outlet 22 for spent ion exchanger and an outlet 21 for treated liquid phase for taking out an aqueous phase with low N-content.

The apparatus furthermore comprises a tank 23 for regeneration of spent ion exchanger being introduced via the pipe 22. The apparatus also comprises a tank 29 for aqueous regeneration liquid which is connected with the tank 23 via a pipe 24. The tank has further outlets 26 and 27 for regenerated ion exchanger and a concentrated aqueous ammonium salt solution, respectively.

The outlet 27 for the concentrated ammonium salt solution is connected with the sedimentation tank 3 via the pipes 16' and 16.

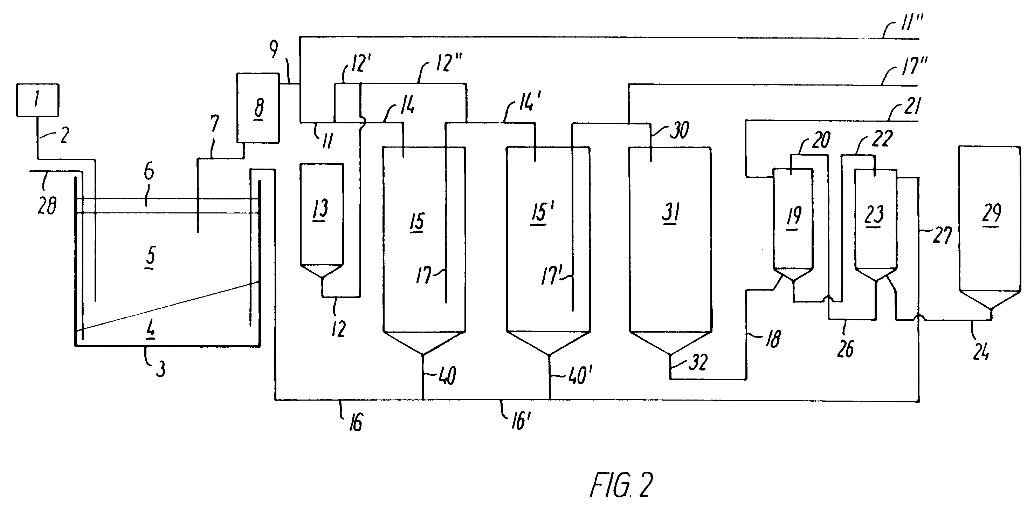

Fig. 2 shows a plant for carrying out the present method in which the flocculation and sedimentation step is performed batch-wise. This plant comprises a sedimentation tank 3 having an inlet for liquid manure 2 coming from a stable 1, an outlet for thick slurry 28 and an outlet 7 for aqueous phase, which outlet is connected with a filtration apparatus 8 having an outlet for filtered liquid 9 which via a not shown change-over valve is connected with an outlet 11'' for aqueous phase with high N-content and a transfer pipe 11 being connected with a combined mixing and sedimentation tank 15.

The apparatus further comprises a tank 13 for an aqueous suspension of flocculating smectite containing clay mineral which via pipes 12, 12' and 14 communicates with the combined mixing and sedimentation tank 15 and which via pipes 12, 12'' and 14' communicates with a second combined mixing and sedimentation tank 15'.

The tank 15 has an outlet 40 for thick slurry phase which via a pipe 16 communicates with the lower part of the sedimentation tank 3.

Further, the tank 15 has an outlet 17 for liquid phase which is connected with the pipe 14' which is connected with a second flocculation and sedimentation tank 15' having an outlet 40' for thick slurry phase, which via a pipe 16' and the pipe 16 is connected with the lower part of the sedimentation tank 3.

The tank 15' is further provided with an outlet 17' for liquid phase which via a change-over valve is connected with an outlet 17'' for aqueous phase with moderate N-content and a transfer pipe 30, which is connected to a buffer tank 31 with an outlet 32 which via a transfer pipe 18, which is connected with a liquid inlet in an ion exchanger tank 19 having an inlet 20 for fresh ion exchanger, an outlet 22 for spent ion exchanger and an outlet 21 for treated liquid phase for taking out an aqueous phase with low N-content.

The apparatus shown furthermore comprises a tank 23 for regeneration of spent ion exchanger being introduced via the pipe 22. The apparatus comprises also a tank 29 for aqueous regeneration liquid which is connected with the tank 23 via a pipe 24. The tank has further outlets 26 and 27 for regenerated ion exchanger and a concentrated aqueous ammonium salt solution, respectively.

The outlet 27 for the concentrated ammonium salt solution is connected with the sedimentation tank 3 via the pipes 16' and 16.

In operation of the plant shown in fig. 1 the manure is separated into three layers in the sedimentation tank 3: Uppermost: a float layer 6, then: a primary aqueous phase 5 and lowermost: "a sediment" 4 in the form of a thick slurry phase having a high dry matter content containing the coarse solid matter components of the liquid manure.

The sedimentation tank 3 is provided with a not shown pump positioned on a raft floating on the surface of the liquid manure. The pump is provided with an adjustable suction pibe extending down into the thin phase from where it sucks up liquid phase which via the filter 8 is transferred into the buffer tank 10. This liquid, referred to above as the primary aqueous phase, is easily pumpable and may be irrigated using standard agricultural irrigation equipment when such irrigation is acceptable. In such case the liquid is withdrawn via the outlet 11'' for aqueous phase with high N-content. This aqueous phase is a colloidal solution of mainly faeces particles of colloidal dimensions in an aqueous solution of mainly salts of ammonia.

In case irrigation with this liquid is not acceptable the liquid is subjected to further treatment. First, a flocculant is added and it has been found that the clay type Bentonite is not only suited but also the best out of a number of substances investigated. The Bentonite is added as an aqueous suspension of Bentonite having a Bentonite concentration about 10 weight-%. The amount of added Bentonite is about 0.2 weight-%, corresponding to about 2 kg Bentonite per 1 t of liquid phase per treatment. By this process colloidal faeces particles and clay particles gather in lumps (flocks) and sink to the bottom in the sedimentation and flocculation tanks 15 and 15'. These lumps will only sink very slowly, as the sedimentation velocity is approx. 1 cm per min. Therefore, the liquid phase admixed with Bentonite must be passed to the tanks 15 and 15' at a velocity which ensures that the upward movement in the tanks is less than 1 cm per min. If the velocity is higher the flocculated material will be entrained in the upwardly moving flow and discharged via the outlet pipes 17 and 17'. By these two treatments with Bentonite, the second treatment being performed essentially for security reasons, it is possible to remove the organic dry matter from the liquid. This ends the ammonium production, but there are still ammonium and inorganic salts dissolved in the liquid referred to above as the secondary aqueous phase.

If irrigation with this liquid is acceptable the liquid is withdrawn via the outlet 17'' for aqueous phase with moderate N-content and irrigated.

In case irrigation with the secondary aqueous phase is not acceptable the liquid is subjected to further treatment in the next step in which ammonium is removed by ion exchange, preferably exchanged with calcium ions.

The ion exchanger is regenerated continuously with calcium and is reused. Hereby ammonium is liberated in a concentrated form as compared with the form it previously had in the liquid manure and withdrawn as the abovementioned concentrated aqueous ammonium salt solution.

This solution is combined with the thick slurry of flocculated material withdrawn from the sedimentation tanks 15 and 15' and returned to the lower part of the sedimentation tank 3.

It has been found that this thick slurry of flocculated material has a remarkable ammonium binding ability manifesting itself in the sedimentation tank 3: even though a considerable dewatering of the thick slurry of the flocculated material takes place in the sedimentation tank 3 this is not accompanied by any noticeable transfer of ammonium to the liquid phase 5, in other words the ammonium recovered in the ion exchange step is effectively transferred to and retained in the thick slurry phase in the sedimentation tank.

It should be noted that according to other embodiments the ammonia exchanged ion exchanger may be withdrawn and either be stored as a by-product or introduced into the sedimentation tank 3. When the ion exchanger is regenerated, preferably with an aqueous CaCl₂-solution, the ammonium salt containing eluate may also be collected and stored as a by-product.

In operation of the plant shown in fig. 2 the liquid phase is withdrawn batch-wise from the sedimentation tank 3, filtrated in the filtration apparatus 8 and transferred directly to the sedimentation and flocculation tank 15 with addition of about 0.2 weight-% Bentonite as an aqueous Bentonite suspension corresponding to that mentioned above. The two suspensions are homogenized in the tank 15 for a few minutes, e.g. by repumping, and then flocculation and sedimentation are allowed to take place.

Then the thick slurry of flocculated precipitated solid material is transferred to the sedimentation tank 3, and the aqueous phase is transferred to the second flocculation and sedimentation tank 15' with addition of a corresponding amount of aqueous Bentonite slurry. The flocculation and sedimentation process in the tank 15' is carried out as described above for the process in the tank 15.

The thick slurry precipitated in the sedimentation tank 15' is transferred to the sedimentation tank 3 and the aqueous phase is transferred to the buffer tank 31 which functions as a reservoir for aqueous phase which may be subjected to continuous ion exchange as described above.

By using the present method the farmer obtains improved possibility of managing his livestock manure, as well as improved possibility of exploiting the fertilizing value. This means that a larger plant production and/or a smaller fertilizer consumption can be obtained.

At certain times of the year the primary aqueous phase may be irrigated directly as aqueous phase with high N-content. When the ammonium content of the primary aqueous phase is unacceptably high, the secondary or at least the ion exchanged secondary aqueous phase with moderate and low N-content, respectively, may be irrigated without causing environmental or other problems.

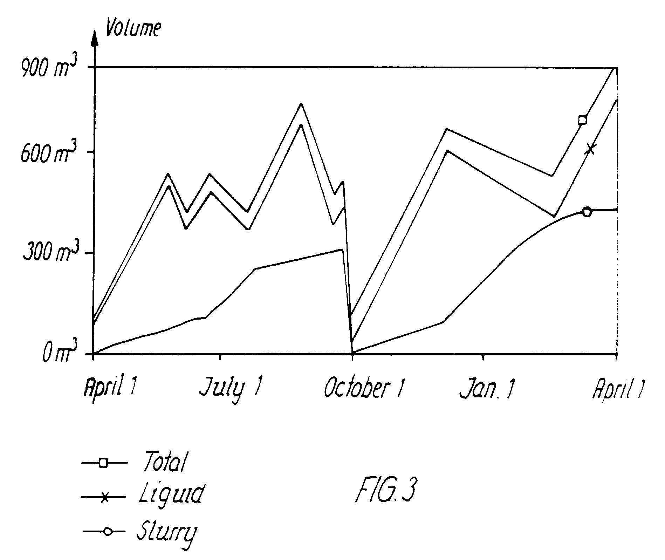

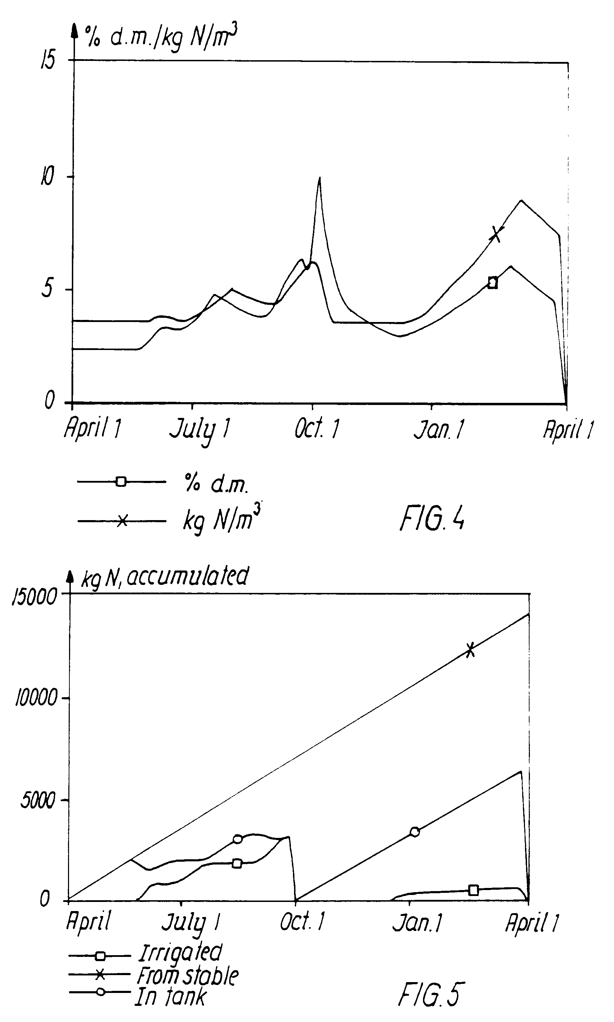

This concept of irrigation with aqueous phases having desired N-contents at various times during the year is further illustrated in example 1 and 2 and with reference to fig. 3 in which the volumes of total material, aqueous phase and thick sludge stored in sedimentation tank 3 are plotted as a function of time, fig. 4 which shows percentage dry matter, kg N/m³, respectively of the material stored in the sedimentation tank plotted as a function of time, and fig. 5 which shows accumulated values of kg N from stable, in tank and irrigated, respectively, as a function of time.

### EXAMPLE 1

The batch-wise embodiment of the present method illustrated in fig. 2 was carried out in a pig farm with a liquid manure production of 10 m³/24 h. The liquid manure exhibited a dry matter content of 2.5 weight-%. The storage capacity of the sedimentation tank 3 was 900 m³. In the second treatment step the primary aqueous phase was mixed with an aqueous suspension of Bentonite having a Bentonite concentration of 10 weight-%. The mineral Glauconite with a modal content of 90% was used as cation exchanger.

The plant was operating in the following way:
In the summer season, i.e. from April 1 to October 1, the liquid manure was continuously introduced into the tank which was substantially empty on April 1. In the period from mid May to the beginning of June the fields were irrigated with primary aqueous phase, i.e. liquid with high N-concentration. After further build-up irrigation with secondary aqueous phase, i.e. liquid with moderate N-concentration, started in mid June and ended in mid July. After a third build-up period the fields were irrigated with primary aqueous phase in the period from mid August to the end of September, and at the end of September the thick slurry accumulated in the sedimentation tank 3 was removed from this tank and distributed on the fields as a high N-plant nutrient.

In the winter season, i.e. from October 1 to April 1, only irrigation with an aqueous phase with a low N-content was acceptable and in order to reduce the amount of stored manure irrigation with ion exchanged secondary aqueous phase took place in the period from September 1 to the end of February. At the end of March the tank 3 was emptied completely and the content was safely distributed on the fields.

A number of operational data for the plant appear from figs. 3-5 and table 1 below.

**TABLE 1**

| | |
|---|---|
| max. N-concentration summer | 5.6 kg/m³ |
| max. N-concentration winter | 9.3 kg/m³ |
| total N from stable | 13400 kg |
| total N irrigated | 3700 kg |
| N irrigated, winter | 460 kg |
| irrigated during the year | 2100 m³ |
| distributed during the year | 1500 m³ |
| annual production of manure | 3600 m³ |
| max. dry matter, tank winter | 6.3 weight-% |
| max. dry matter, tank summer | 6.5 weight-% |
| irrigated area, winter | 9.2 ha |

### EXAMPLE 2

The continuous embodiment of the present method illustrated in fig. 1 was carried out on a pig farm with a liquid manure production of 10 m³/24 h. The liquid manure exhibited a dry matter content of 4 weight-%. The storage capacity of the sedimentation tank 3 was 900 m³. In the second treatment step the primary aqueous phase was mixed with an aqueous suspension of Bentonite having a Bentonite concentration of 10 weight-%. The mineral Glauconite with a modal content of 90% was used as cation exchanger.

The flows and material concentrations at a number of crucial positions in the plant are presented in table 2:

**TABLE 2**

| | | | | | | | | | | |
|---|---|---|---|---|---|---|---|---|---|---|
| Output type | | "A" | | "B" | | | "C" | | | |
| position | 2 | 11 | 17 | 17' | 40 | 40' | 21 | 27 | 16 | 4 |
| m³/day | 10 | 15 | 13 | 11 | 2.5 | 2 | 11 | 1.8 | 6.3 | 3 |
| % dry matter | 4 | 2 | 1.4 | 0.9 | 6.2 | 5.3 | ** | 3.7 | 5.2 | 10 |
| kg total N/m³ | 6 | 3.5 | 2.9 | 2.5 | 6.5 | 5 | 0.5 | 12 | 7.5 | 15 |
| kg ammonium/N/m³ | 3 | 3 | 2.7 | 2.4 | 4.5 | 4.3 | 0.4 | 12 | 6.5 | 13 |
| kg d.m./day | 400 | 300 | 175 | 95 | 155 | 105 | ** | 64* | 325 | 300 |
| kg total-N/day | 60 | 52 | 36 | 26 | 16 | 10 | 5.4 | 21 | 47 | 45 |
| kg Amm.-N/day | 30 | 45 | 34 | 25 | 11 | 8.5 | 4.3 | 21 | 41 | 40 |
| kg Bentonite, add./day*** | | | | | 30 | 25 | | | | |
| kg CaCl₂, add./day**** | | | | | | | | 68 | | |

| | | | | | | | | | | |
|---|---|---|---|---|---|---|---|---|---|---|
| * theoretical value, calculated as ammonium chloride | | | | | | | | | | |
| ** theoretically 1-5% d.m., dependent upon regeneration concentration | | | | | | | | | | |
| *** max. values | | | | | | | | | | |
| **** min. values | | | | | | | | | | |
| "A": primary aqueous phase "B": secondary aqueous phase "C": ion exchanged secondary aqueous phase | | | | | | | | | | |

## Claims

1. A method of separating liquid manure into a thick slurry phase with high dry matter content and an aqueous phase with a N-content which according to the varying tolerance levels of a recipient for said aqueous phase is adjusted to be high, moderate or low whereby the liquid manure in a first treatment step is subjected to sedimentation in a sedimentation tank with formation of a thick slurry phase having high dry matter content containing the coarse solid matter components of the liquid manure and a primary aqueous phase freed of the coarse solid matter content of the liquid manure, the latter phase after filtration being discharged as aqueous phase with high N-content, when this is tolerated by the recipient, or, if not, passed to a second treatment step where the primary aqueous phase is mixed with an aqueous solution or suspension of a flocculant, preferably with an aqueous suspension of one or more flocculating smectitic clays in a mixing ratio of 0.3-10, preferably 1-3 kg smectite/t liquid phase, whereafter the mixture is subjected to flocculation and sedimentation with formation of a secondary thick slurry phase with high dry matter content containing sedimented flocculated material which is returned to the first treatment step and united with the thick slurry phase formed therein, and a secondary aqueous phase freed of the suspended solid matter content in the primary aqueous phase, the said secondary phase being discharged as aqueous phase with moderate N-content, when this is tolerated by the recipient, or, if not, passed to a third treatment step where the secondary aqueous phase is subjected to ion exchange with a cation exchanger, preferably an inorganic cation exchanger, in particular selected from clays and/or zeolites with a high specific ion exchange capacity for ammonium, whereafter the thus treated secondary aqueous phase is discharged as aqueous phase with low N-content, and that the thick slurry phase is discharged from the sedimentation tank as thick slurry phase with high dry matter content.

2. A method according to claim 1, **characterized** in that the second treatment step is repeated at least once.

3. A method according to claims 1-2, **characterized** in that the third treatment step is repeated at least once.

4. A method according to claims 1-3, **characterized** in that the ammonium loaded ion exchanger is discharged from the third treatment step and either stored as a separate product or transferred to the first treatment step and united with the thick slurry phase formed therein.

5. A method according to claims 1-3, **characterized** in that the ammonium loaded ion exchanger is discharged from the third treatment step and passed to a regeneration step to be subjected to a treatment with an aqueous solution of a regeneration agent, preferably in the form of an aqueous solution of CaCl₂, providing a fresh regenerated cation exchanger and an aqueous ammonium ion containing eluate, which is either stored as a separate product or united with the secondary thick slurry phase withdrawn from the second treatment step and transferred to the first treatment step with the secondary thick slurry.

6. A method according to claims 1-5, **characterized** in that cation exchanger is added and discharged continuously in the third treatment step in counter-current to the secondary aqueous phase, and that the cation regeneration step is carried out continously and in counter-current.

7. A method according to claims 1-6, **characterized** in that the liquid manure contains et least 25 weight-% pig manure, calculated on the basis of solid material.

8. Apparatus for separating liquid manure into a thick slurry phase with high dry matter content and an aqueous phase with desired - high, moderate or low - N-content comprising
a sedimentation tank (3) having an inlet for liquid manure (2), an outlet for thick slurry (28) and an outlet (7) for a primary aqueous phase which is connected with a filtration apparatus (8) provided with an outlet (9) for filtered liquid, which via a change-over valve is connected with an outlet (11'') for aqueous phase with high N-content and a transfer pipe (11, 11') communicating with an inlet pipe (14) of a flocculation and sedimentation tank (15);
a tank (13) for an aqueous solution or suspension of flocculating agent, which via a pipe (12) and the inlet pipe (14) is connected with the flocculation and sedimentation tank (15) having an outlet (40) for thick slurry phase, which via a pipe (16) is connected with the lower part of the sedimentation tank (3), and an outlet (17) for secondary aqueous phase, which via a change-over valve communicates with an outlet (17'') for aqueous phase with moderate N-content and a transfer pipe (18) being connected with a liquid inlet in an ion exchanger tank (19) having an outlet for treated liquid phase being connected with an outlet (21) for an aqueous phase with low N-content and optionally an inlet (20) for fresh ion exchanger and an outlet for spent ion exchanger (22).

9. Apparatus according to claim 8, **characterized** in that it has a buffer tank (10) for primary aqueous phase arranged between the outlet (9) for filtered liquid and the inlet pipe (14) and a mixing unit (115) arranged between the transfer pipes (11, 12) and the inlet pipe (14).

10. Apparatus according to claim 9, **characterized** in that it has a buffer tank (31) for the secondary aqueous phase arranged between the outlet (17) for secondary aqueous phase and the transfer pipe (18) connected with the liquid inlet in the ion exchanger tank.

## Patentansprüche

1. Verfahren zur Trennung von Gülle in eine dicke Aufschlämmungsphase mit hohem Gehalt an Trockenmasse und einer wässrigen Phase mit einem N-Gehalt, der je nach den verschiedenen Toleranzgraden eines Empfängers der genannten wässrigen Phase auf hoch, mäßig oder niedrig eingestellt wird, wobei die Gülle in einem ersten Behandlungsschritt einer Sedimentation in einem Absetzbehälter unterzogen wird, und zwar unter Bildung einer dicken Aufschlämmungsphase mit hohem Gehalt an Trockenmasse, die die groben Feststoffkomponenten der Gülle enthält, und einer ersten wässrigen Phase, die von dem Gehalt an groben Feststoffen der Gülle befreit ist, und die letztere Phase nach Filtration als wässrige Phase mit hohen N-Gehalt entnommen wird, sofern dies vom Empfänger toleriert wird, oder - andernfalls - zu einem zweiten Behandlungsschritt geleitet wird, wo die erste wässrige Phase mit einer wässrigen Lösung oder Suspension eines Flockungsmittels vermischt wird, vorzugsweise mit einer wässrigen Suspension eines oder mehrerer ausflockenden Bentonit-artigen Materialien in einem Mischverhältnis von 0,3-10, vorzugsweise 1-3 kg Bentonit/t flüssiger Phase, wonach die Mischung einer Ausflockung und Sedimentation unterzogen wird unter Bildung einer zweiten dicken Aufschlämmungsphase mit hohem Trockenmassegehalt, die sedimentiertes ausgeflocktes Material enthält, das zu dem ersten Behandlungsschritt zurückgeleitet und mit der dort gebildeten dicken Aufschlämmungsphase vereinigt wird, und unter Bildung einer zweiten wässrigen Phase, die von dem suspendierten Feststoffgehalt der ersten wässrigen Phase befreit ist, wobei die genannte zweite Phase als wässrige Phase mit mäßigem N-Gehalt entnommen wird, wenn dies von dem Empfänger toleriert wird, oder - andernfalls - zu einem dritten Behandlungsschritt geleitet wird, wo die zweite wässrige Phase einem Ionenaustausch mit einem Kationenaustauscher unterzogen wird, vorzugsweise einem anorganischen Kationenaustauscher, insbesondere ausgewählt aus Tonmaterialien und/oder Zeolithen mit hoher spezifischer Ionenaustausch-Kapazität für Ammonium, wonach die so behandelte zweite wässrige Phase als wässrige Phase mit geringem N-Gehalt entnommen wird, und die dicke Aufschlämmungphase aus dem Absetzbehälter als dicke Aufschlämmungsphase mit hohem Trockenmassegehalt entnommen wird.

2. Verfahren nach Anspruch 1, dadurch gekennzeichnet, daß der zweite Behandlungsschritt wenigstens einmal wiederholt wird.

3. Verfahren nach Anspruch 1-2, dadurch gekennzeichnet, daß der dritte Behandlungsschritt wenigstens einmal wiederholt wird.

4. Verfahren nach Anspruch 1-3, dadurch gekennzeichnet, daß der mit Ammonium angereicherte Ionenaustauscher der dritten Behandlungsstufe entnommen wird und entweder als ein separates Produkt gelagert oder zu der ersten Behandlungsstufe geleitet und mit der dort gebildeten dicken Aufschlämmungsphase vereinigt wird.

5. Verfahren nach Anspruch 1-3, dadurch gekennzeichnet, daß der mit Ammonium angereicherte Ionenaustauscher der dritten Behandlungsstufe entnommen und einem Regenerierungsschritt zugeführt wird, wo er einer Behandlung mit einer wässrigen Lösung eines Regenerierungsmittels, vorzugsweise in Form einer wässrigen Lösung von CaCl₂, unterzogen wird, was einen frisch regenerierten Kationenaustauscher und ein wässriges, Ammoniumionen enthaltendes Eluat ergibt, das entweder als ein separates Produkt gelagert oder mit der zweiten dicken Aufschlämmungsphase vereinigt wird, die der zweiten Behandlungsstufe entnommen wurde, und mit der zweiten dicken Aufschlämmung der ersten Behandlungsstufe zugeführt wird.

6. Verfahren nach Anspruch 1-5, dadurch gekennzeichnet, daß der Kationenaustauscher in der dritten Behandlungsstufe kontinuierlich zugegeben und entnommen wird, und zwar im Gegenstrom zu der zweiten wässrigen Phase, und daß der Regenerierungsschritt des Kationenaustauschers kontinuierlich und im Gegenstrom durchgeführt wird.

7. Verfahren nach Anspruch 1-6, dadurch gekennzeichnet, daß die Gülle wenigstens 25 Gew.-% Schweinegülle, errechnet auf der Basis des Feststoffmaterials, enthält.

8. Vorrichtung zum Trennen von Gülle in eine dicke Aufschlämmungsphase mit hohem Gehalt an Trockenmasse und eine flüssige Phase mit wahlweise hohem, mäßigem oder geringem N-Gehalt, die umfaßt:
einen Absetzbehälter (3) mit einem Zulauf für Gülle (2), einem Auslaß für dicke Aufschlämmung (28) und einem Auslaß (7) für eine erste wässrige Phase, verbunden mit einer Filtriervorrichtung (8), die mit einem Auslaß (9) für filtrierte Flüssigkeit ausgestattet ist, der über ein Umschaltventil verbunden ist mit einem Auslaß (11'') für die wässrigen Phase mit hohem N-Gehalt und einem Überführungsrohr (11, 11'), das in Verbindung steht mit einem Einlaßrohr (14) eines Ausflockungs- und Absetzbehälters (15);
einen Behälter (13) für eine wässrige Lösung oder Suspension des Flockungsmittels, der durch Rohr (12) und dem Einlaßrohr (14) mit dem Ausflockungs- und Absetzbehälter (15) verbunden ist, der einen Auslaß (40) für die dicke Aufschlämmungsphase hat, wobei dieser Auslaß mittels einem Rohr (16) mit dem unteren Teil des Absetzbehälters (3) verbunden ist, und der einen Auslaß (17) für die zweite wässrige Phase hat, der mittels eines Umschaltventils mit einem Auslaß (17'') für die wässrige Phase mit mäßigem N-Gehalt und einem Überführungsrohr (18) in Verbindung steht, das mit einer Eintrittsöffnung für Flüssigkeit in einem Ionenaustauscher-Behälter (19) verbunden ist, der einen Auslaß für die behandelte flüssige Phase hat, welcher in Verbindung steht mit einem Auslaß (21) für eine wässrige Phase mit geringem N-Gehalt, wobei der Ionenaustauscher-Behälter gegebenenfalls einen Einlaß (20) für frischen Ionenaustauscher und einen Auslaß für verbrauchten Ionenaustauscher (22) hat.

9. Vorrichtung nach Anspruch 8, dadurch gekennzeichnet, daß diese einen Zwischenbehälter (10) für die erste wässrige Phase aufweist, die zwischen dem Auslaß (9) für filtrierte Flüssigkeit und dem Einlaßrohr (14) angeordnet ist, sowie eine Mischeinheit (115), angeordnet zwischen den Überführungsrohren (11,12) und dem Einlaßrohr (14).

10. Vorrichtung nach Anspruch 9, dadurch gekennzeichnet, daß diese einen Zwischenbehälter (31) für die zweite wässrige Phase hat, angeordnet zwischen dem Auslaß (17) für die zweite wässrige Phase und dem Überführungsrohr (18), das mit der Einlaßöffnung für Flüssigkeit in den Ionenaustauscher-Behälter verbunden ist.

## Revendications

1. Procédé de séparation de lisier en une phase boueuse épaisse à teneur élevée en matières sèches et une phase aqueuse à teneur en N qui, selon les niveaux de tolérance variables d'un récipient vis à vis de ladite phase aqueuse, est ajustée pour être élevée, modérée ou faible, le lisier étant soumis dans une première étape de traitement à une sédimentation dans une citerne de sédimentation avec formation d'une phase boueuse épaisse à teneur élevée en matières sèches contenant les composants grossiers de matière solide du lisier et d'une phase aqueuse primaire libérée du contenu grossier de matière solide du lisier, cette dernière phase après filtration étant soutirée comme phase aqueuse à teneur en N élevée, lorsque celle-ci est tolérée par le récipient, ou, sinon est soumise à une deuxième étape de traitement où la phase aqueuse primaire est mélangée avec une solution aqueuse ou une suspension d'un floculant, de préférence avec une suspension aqueuse d'une ou plusieurs argiles floculantes de smectite dans un rapport de mélange de 0,3 à 10, de préférence 1 à 3 kg de smectite/tonne de phase liquide, le mélange étant ensuite soumis à une floculation et à une sédimentation avec formation d'une phase secondaire boueuse épaisse à teneur élevée en matières sèches contenant du matériau floculé sédimenté qui est renvoyé à la première étape de traitement et uni avec la phase boueuse épaisse qui s'y est formée, et une deuxième phase aqueuse libre du contenu en matière solide suspendue dans la phase aqueuse primaire, ladite phase secondaire étant soutirée comme phase aqueuse à teneur en N modérée, lorsque ceci est toléré par le récipient, ou, sinon, est soumise à une troisième étape de traitement dans laquelle la phase aqueuse secondaire est soumise à un échange d' ions avec un échangeur de cations, de préférence un échangeur de cations minéraux, en particulier choisis parmi des argiles et/ou des zéolites avec une capacité d'échange d'ion spécifique élevée pour l'ammonium, la phase aqueuse secondaire ainsi traitée étant soutirée comme phase aqueuse à teneur en N faible, et la phase boueuse épaisse étant soutirée à partir de la citerne de sédimentation sous forme de phase boueuse épaisse à teneur élevée en matières sèches.

2. Procédé selon la revendication 1, caractérisé en ce que la deuxième étape de traitement est répétée au moins une fois.

3. Procédé selon les revendications 1 et 2, caractérisé en ce que la troisième étape de traitement est répétée au moins une fois.

4. Procédé selon les revendications 1 à 3, caractérisé en ce que l'échangeur d'ions chargé en ammonium est soutiré à partir de la troisième étape de traitement et, soit est stocké sous forme de produit séparé, soit transféré à la première étape de traitement et réuni à la phase boueuse épaisse qui s'y est formée.

5. Procédé selon les revendications 1 à 3, caractérisé en ce que l'échangeur d'ions chargé en ammonium est soutiré de la troisième étape de traitement et passe à une étape de régénération pour être soumis à un traitement avec une solution aqueuse d'un agent de régénération, de préférence sous forme d'une solution aqueuse de CaCl₂, fournissant un échangeur de cations fraîchement régénérés et un éluat liquide contenant l'ion ammonium, qui est soit stocké sous forme de produit séparé, soit réuni à la phase secondaire boueuse épaisse retirée de la deuxième étape de traitement et transféré à la première étape de traitement avec la boue épaisse secondaire.

6. Procédé selon les revendications 1 à 5, caractérisé en ce que l'échangeur de cations est ajouté et soutiré en continu dans la troisième étape de traitement à contre-courant de la phase aqueuse secondaire, et en ce que l'étape de régénération du cation est effectuée continûment et à contre-courant.

7. Procédé selon les revendications 1 à 6, caractérisé en ce que le lisier contient au moins 25% en poids de fumier de porc, calculé sur la base de matériau solide.

8. Appareil pour séparer un lisier en une phase boueuse épaisse à teneur élevée en matières sèches et une phase aqueuse à teneur en N souhaitée, élevée, modérée ou faible, comprenant:
- une citerne de sédimentation (3) ayant une entrée pour le lisier (2), une sortie pour la boue épaisse (28) et une sortie (7) pour une phase aqueuse primaire qui est reliée à un appareil de filtration (8) équipé d'une sortie (9) pour le liquide filtré, qui à travers une vanne de permutation est reliée à une sortie (11'') pour la phase aqueuse à teneur en N élevée et à un tuyau de transfert (11, 11') communiquant avec un tuyau d'entrée (14) d'une citerne de floculation et de sédimentation (15);
- une citerne (13) pour une solution aqueuse ou une suspension d'agent de floculation qui, par l'intermédiaire d'un tuyau (12) et du tuyau d'entrée (14), est reliée à la citerne de floculation et de sédimentation (15) ayant une sortie (40) pour la phase boueuse épaisse, qui à travers un tuyau (16) est reliée avec la partie inférieure de la citerne de sédimentation (3) et une sortie (17) pour la phase aqueuse secondaire qui, par l'intermédiaire d'une vanne de permutation communique avec une sortie (17'') pour la phase aqueuse à teneur modérée en N et avec un tuyau de transfert (18) relié avec une entrée de liquide dans une citerne d'échange d'ions (19) ayant pour la phase liquide traitée une sortie reliée avec une sortie (21) pour la phase aqueuse à teneur en N faible et éventuellement une entrée (20) pour l'échangeur d'ions frais et une sortie pour l'échangeur d'ions usés (22).

9. Appareil selon la revendication 8, caractérisé en ce qu'il comporte une citerne tampon (10) pour la phase aqueuse primaire, disposée entre la sortie (9) pour le liquide filtré et le tuyau d'entrée (14), et une unité de mélange (115) disposée entre les tuyaux de transfert (11, 12), et le tuyau d'entrée (14).

10. Appareil selon la revendication 9, caractérisé en ce qu'il comporte une citerne tampon (31) pour la phase aqueuse secondaire, disposée entre la sortie (17) pour la phase aqueuse secondaire et le tuyau de transfert (18) relié à l'entrée de liquide dans la citerne d'échange d'ions.
